(19) Europäisches Patentamt
European Patent Office
Office européen des brevets

(11) **EP 3 574 199 B1**

(12) **FASCICULE DE BREVET EUROPEEN**

(45) Date de publication et mention
de la délivrance du brevet:
**03.03.2021 Bulletin 2021/09**

(21) Numéro de dépôt: **18705688.2**

(22) Date de dépôt: **29.01.2018**

(51) Int Cl.:
**F02C 7/232** (2006.01)     **F02C 7/32** (2006.01)
**F02C 9/30** (2006.01)     **F02C 7/236** (2006.01)

(86) Numéro de dépôt international:
**PCT/FR2018/050199**

(87) Numéro de publication internationale:
**WO 2018/138454 (02.08.2018 Gazette 2018/31)**

(54) **SYSTEME D'ALIMENTATION EN CARBURANT D'UNE TURBOMACHINE**

**SYSTEM ZUR VERSORGUNG EINER TURBOMASCHINE MIT KRAFTSTOFF**

**SYSTEM FOR SUPPLYING FUEL TO A TURBOMACHINE**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.01.2017 FR 1750743**

(43) Date de publication de la demande:
**04.12.2019 Bulletin 2019/49**

(73) Titulaire: **Safran Aircraft Engines
75015 Paris (FR)**

(72) Inventeurs:
• **PORA, Loïc
77550 Moissy-Crayamel (FR)**
• **DE WERGIFOSSE, Huguette
77550 Moissy-Crayamel (FR)**

(74) Mandataire: **Gevers & Orès
Immeuble le Palatin 2
3 Cours du Triangle
CS 80165
92939 Paris La Défense Cedex (FR)**

(56) Documents cités:
**EP-A1- 3 051 103     FR-A1- 2 934 321
FR-A1- 3 035 155**

## Description

### Domaine de l'invention :

La présente invention se rapporte au domaine des turbomachines. Elle concerne plus particulièrement le circuit d'alimentation en carburant et la régulation du débit de carburant dans ce circuit.

### Etat de la technique :

L'état de la technique comprend notamment les demandes de brevet publiées sous les numéros FR-A1-2 934 321, EP-A1-3 051 103 et FR-A1-3 035 155.

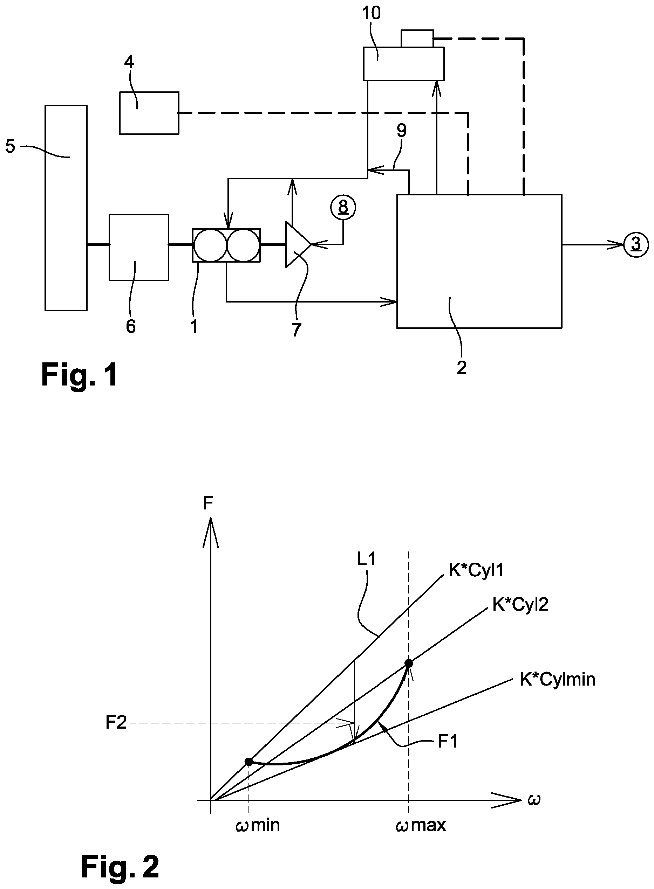

Les turbomachines installées sur un aéronef sont équipées d'un circuit d'alimentation en carburant, délivrant le carburant à la chambre de combustion, qui doit être régulé en fonction du besoin selon les conditions de vol. En référence à la figure 1, le circuit de carburant comprend généralement une pompe 1 principale haute pression de type volumétrique qui envoie le carburant vers un groupe hydromécanique 2 avant l'injection vers la chambre de combustion 3. L'ensemble est agencé pour assurer, en sortie vers la chambre de combustion, un débit de carburant adapté au besoin. Un boîtier de commande 4 pilote généralement le groupe hydromécanique 2 pour qu'il adapte le débit envoyé par la pompe 1 au besoin de la chambre de combustion 3.

En général, la pompe 1 est entraînée par un arbre de sortie du boîtier d'accessoires 5 de la turbomachine, lui-même entraîné par un axe du corps primaire de la turbomachine, non représenté sur la figure 1. Un dispositif d'entraînement 6 est généralement installé entre l'arbre du boîtier de relais d'accessoires 5 et la pompe 1 pour adapter les régimes de rotation entre ces deux équipements. Ce dispositif détermine un rapport K entre la vitesse de la pompe 1 et la vitesse de rotation $\omega$ de l'axe moteur de la turbomachine. Ce dispositif entraîne généralement aussi un moyen d'alimentation 7 du circuit à partir des réservoirs de carburant 8.

La caractéristique linéaire Cyl de la pompe 1 entre le débit de carburant et sa vitesse d'entraînement dépend en particulier de sa cylindrée. La pompe 1 doit être dimensionnée de telle manière que cette cylindrée permette de délivrer les débits requis pour tous les régimes de fonctionnement de la turbomachine, donc de vitesse de l'arbre de sortie du boîtier de relais d'accessoires 5, aussi bien à basse vitesse qu'à haute vitesse.

Comme on peut le voir sur la figure 2, représentant les variations de débit F en fonction de la vitesse de rotation $\omega$ de l'axe moteur de la turbomachine, le besoin F1 en carburant varie de façon non linéaire en fonction du régime de la turbomachine. La vitesse de rotation $\omega$ de l'axe moteur de la turbomachine varie entre une valeur minimale $\omega$min, pour l'allumage de la turbomachine, et une valeur maximale $\omega$max pour le décollage. Le régime correspondant à un vol de croisière se situe entre ces deux extrêmes.

Suivant l'application, le point crucial est situé soit à l'allumage basse vitesse soit au décollage, à haute vitesse. Sur la figure 2, ce point crucial se situe au niveau de l'allumage, il faut choisir la cylindrée de la pompe de telle manière que sa caractéristique linéaire soit égale à la valeur Cyl1, pour assurer un débit suffisant lors de toutes les conditions de vol. Cette valeur Cyl1 peut être significativement supérieure à la valeur minimale Cylmin nécessaire dans certaines conditions de vol, voire à celle Cyl2 nécessaire lors du décollage.

Suivant ce dimensionnement, le débit fourni par la pompe suit donc la droite L1 sur le diagramme débit/vitesse de rotation de la figure 2. Pendant une large phase de vitesse d'entraînement, notamment en vol de croisière, la pompe délivre donc un débit supérieur au besoin en débit carburant, donc un surplus F2 de carburant.

Le groupe hydromécanique 2 doit donc renvoyer vers la pompe, par une boucle de recirculation 9, le surplus de carburant F2 par rapport au besoin.

Ce problème de régulation du débit de carburant est encore accentué lorsque le circuit de carburant est utilisé, comme indiqué sur la figure 1, pour actionner des géométries variables 10 de la turbomachine. L'actionnement des géométries variables 10 crée des variations de besoin en carburant dans le circuit qui doivent être prises en compte dans le dimensionnement de la pompe 1, dans le fonctionnement du groupe hydromécanique 2 et dans les caractéristiques de la boucle de recirculation 9.

Cette architecture du système d'alimentation en carburant présente plusieurs inconvénients. Le surplus de débit injecté par la pompe 1 induit un surplus de prélèvement de puissance sur le boîtier de relais d'accessoires 5 par rapport au besoin, préjudiciable au rendement de la turbomachine. Le surplus de puissance mécanique se transforme en puissance thermique dissipée dans la boucle de recirculation 9 qui doit être évacuée. Cela a une influence négative sur la taille et la masse du circuit de carburant, notamment pour des échangeurs thermiques, non représentés, placés pour évacuer la chaleur dans ce circuit.

Il est donc important d'adapter le débit de la pompe 1 aux différents points de fonctionnement de la turbomachine pour gagner en puissance prélevée sur le boîtier de relais d'accessoires 5, ce que ne permet pas le dispositif d'entraînement 6 de l'état de l'art.

Par ailleurs, un groupe hydromécanique 2 selon l'état de la technique, non détaillé sur la figure, est généralement composé :

- d'un doseur piloté par une servovalve dont la position est contrôlée par un capteur de position ;
- d'une soupape régulatrice, envoyant le surplus de débit délivré par la pompe dans la boucle de recirculation 9, et régulant la différence de pression aux bornes du doseur ;
- d'un clapet stop, piloté par une servovalve permettant de pressuriser le système carburant et de couper l'injection.

Pour que le groupe hydromécanique 2 fonctionne correctement, une recirculation est nécessaire afin d'assurer un écart de pression aux bornes du doseur, que les géométries variables 10 soient actionnées ou pas.

Ainsi, le dimensionnement de la pompe 1 est normalement réalisé en considérant un surplus de débit égal à la somme des fuites du système, du débit minimum nécessaire pour réguler l'écart de pression aux bornes du doseur et du débit lié aux déplacements des géométries variables 10.

Ce surplus de débit peut représenter entre 60 et 95% du débit total dimensionnant la pompe 1 en prenant en compte le diagramme de la figure 2.

En admettant que l'on ait solutionné le problème de l'adaptation de la vitesse de rotation de la pompe selon les points de fonctionnement de la turbomachine, un circuit carburant classique nécessite ce dernier surplus de débit. Il ne permet donc pas d'atteindre le gain maximum de puissance rendu possible par une éventuelle adaptation du régime de la pompe 1.

L'invention a pour objectif de proposer une solution permettant de tirer partie de manière plus optimale d'un gain de puissance autorisé par l'adaptation du régime de la pompe au besoin en carburant de la turbomachine pour ses différents points de fonctionnement.

**Exposé de l'invention :**

A cet effet, l'invention concerne un système d'alimentation en carburant d'une turbomachine, comportant un circuit de carburant comportant un moyen de pressurisation en sortie dudit circuit, une pompe agencée pour envoyer dans ledit circuit un débit de carburant qui est une fonction croissante de la vitesse de rotation d'un arbre de ladite pompe, caractérisé en ce que le circuit comporte un capteur de débit placé entre la sortie de la pompe et le moyen de pressurisation, le capteur de débit comprenant un tiroir coulissant, un moyen de rappel et un capteur de position dudit tiroir, la position dudit tiroir étant pilotée par une différence de pression aux bornes du capteur de débit conformée pour compenser l'effort appliqué par le moyen de rappel sur ledit tiroir, le circuit étant agencé pour que la position dudit tiroir indique le débit passant par le capteur de débit, en ce que le système comporte un dispositif agencé pour entraîner la pompe avec une vitesse de rotation commandable, et en ce que le système comporte des moyens agencés pour commander le dispositif à partir d'une mesure fournie par le capteur de débit, de manière à adapter la vitesse de rotation de l'arbre de la pompe pour respecter une consigne de débit en sortie du circuit de carburant.

Grâce à la mesure de débit, le système peut adapter le régime de la pompe pour fournir un débit adapté au besoin. Donc le système permet de tirer parti de manière optimale de la capacité de son dispositif d'entraînement à faire varier la vitesse de la pompe et il minimise la puissance prélevée pour alimenter la chambre de combustion en carburant.

Un autre avantage est qu'en régime établi, le débit fourni par la pompe étant adapté, il n'y a pas de débit de recirculation, comme dans une solution classique. De plus, ce circuit de carburant peut se passer de doseur, dont la fonction est assurée par le capteur de débit et des moyens, généralement électroniques, pour commander le dispositif d'entraînement de la pompe.

Par ailleurs, le concept permet de supprimer des composants du groupe hydromécanique selon l'état de la technique, tels que la soupape de régulation et une servovalve de pilotage du doseur, ce qui représente un gain de masse.

En outre, cela permet d'utiliser des composants certifiés ou de faire évoluer une installation existante.

Le circuit de carburant peut comporter une boucle de commande destinée à actionner des géométries variables de la turbomachine, ladite boucle de commande démarrant par un piquage sur une dérivation placée entre la sortie de la pompe et le capteur de débit.

Le fonctionnement du système est particulièrement adapté à ce cas. Lorsque les géométries variables sont actionnées, le capteur de débit placé après la dérivation vers les actionneurs voit une baisse de débit, ce qui oblige les moyens de commande du dispositif d'entraînement à augmenter la vitesse de la pompe pour augmenter le débit afin d'alimenter la chambre d'injection et de maintenir la pression pour les actionneurs, coopérant pour cela avec le clapet de pressurisation.

Avantageusement, le dispositif d'entraînement est destiné à entraîner la pompe à partir d'un axe moteur de ladite turbomachine et est agencé pour faire varier le rapport entre la vitesse de rotation de l'arbre de la pompe et celle de l'axe moteur.

De préférence, le dispositif d'entraînement comporte un réducteur à train épicycloïdal comprenant trois éléments, un planétaire central, une couronne externe et un porte-satellites dont les satellites s'engrènent avec le planétaire et la couronne, un premier des trois éléments étant destiné à être relié à l'axe moteur et un second des trois éléments étant destiné à être couplé à un arbre de la pompe, caractérisé en ce que lesdits trois éléments sont mobiles en rotation autour d'un axe du réducteur, en ce que ledit dispositif d'entraînement comporte en outre au moins des premiers moyens électriques agencés pour entraîner en rotation le troisième desdits éléments du réducteur, de manière à modifier un rapport de vitesse de rotation entre le premier et le second desdits éléments.

Cette solution comporte de multiples avantages. Elle permet entre autre d'utiliser le réducteur nécessaire pour fournir le bon rapport de réduction entre l'axe moteur et la pompe pour faire varier la vitesse de la pompe.

De préférence le dispositif d'entraînement comporte des seconds moyens électriques couplés au premier ou au second desdits éléments du réducteur, les premier et second moyens électriques étant agencés pour transférer de la puissance électrique de manière réversible de l'un à l'autre.

Cette solution permet un gain sur la puissance prélevée pour le fonctionnement de la pompe par un transfert de puissance entre les premiers et les seconds moyens électriques.

L'invention concerne également une turbomachine comportant un système selon l'une des revendications précédentes.

Avantageusement, un boîtier de relais d'accessoires est placé entre l'axe moteur et le dispositif d'entraînement.

L'invention concerne aussi un procédé de régulation d'une pompe à carburant pour une telle turbomachine dans un aéronef, caractérisé en ce qu'il met en œuvre des lois de pilotage de la vitesse de rotation de l'arbre de la pompe, qui augmentent ou, respectivement, diminuent cette vitesse lorsque le débit indiqué par le capteur diminue ou augmente, de manière à ce que le débit et la pression en sortie du circuit soient adaptés aux conditions de vol de l'aéronef.

Avantageusement, lorsque le système d'alimentation est utilisé pour actionner des géométries variables, lesdites lois de pilotage sont agencées pour adapter également le débit fourni par la pompe et la pression dans le circuit aux conditions d'utilisation des géométries variables.

**Brève description des figures :**

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

la figure 1 présente très schématiquement un circuit de carburant selon l'état de la technique ;
la figure 2 présente un diagramme en vitesse de rotation et débit montrant l'écart entre le débit fourni par la pompe de carburant et le besoin pour un circuit selon la figure 1;
la figure 3 présente très schématiquement une demi coupe d'une turbomachine pouvant utiliser l'invention ;
la figure 4 présente des vues en éclaté et un schéma pour un réducteur à train épicycloïdal pouvant être utilisé par l'invention ;
la figure 5 présente le schéma d'un exemple de dispositif d'entraînement de la pompe utilisant un réducteur de la figure 4 ;
la figure 6 présente très schématiquement une première configuration de système d'alimentation en carburant utilisant le dispositif de la figure 5 ; et
la figure 7 présente très schématiquement une deuxième configuration de système d'alimentation en carburant utilisant le dispositif de la figure 5.

Les éléments ayant les mêmes fonctions dans les différentes mises en œuvre ont les mêmes références dans les figures.

**Description d'un mode de réalisation :**

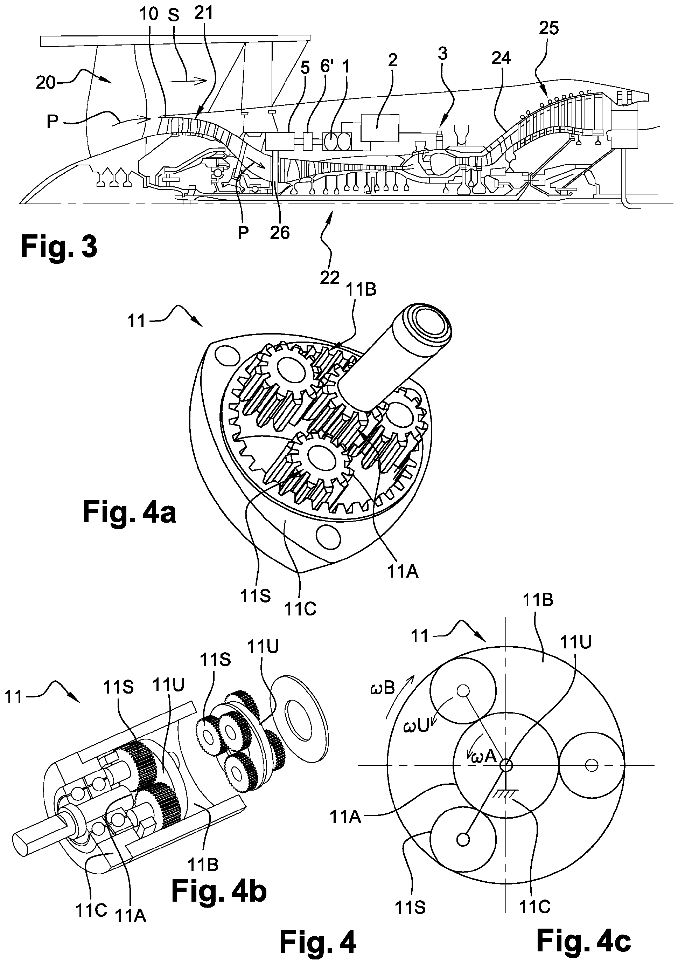

Dans une turbomachine, par exemple une turbomachine à double flux représentée sur la figure 3, le flux d'air en sortie de soufflante 20 se divise en un flux primaire P entrant dans le moteur et en un flux secondaire S entourant ce dernier. Le flux primaire traverse alors des compresseurs basse pression 21 et haute pression 22, la chambre de combustion 3 alimentée par le circuit de carburant précédemment évoqué, puis des turbines haute pression 24 et basse pression 25. Généralement, l'ensemble des compresseurs haute pression 22 et des turbines haute pression 24 tourne d'un bloc sur un axe commun 26 et forme la partie moteur de la turbomachine avec la chambre de combustion.

Généralement, l'axe moteur 26 entraîne le boîtier de relais d'accessoires 5 qui peut comporter plusieurs trains d'engrenages reliés à des arbres de sortie pour entraîner divers équipements. Ici un des arbres de sortie du boîtier d'engrenage entraîne, par un dispositif d'entraînement 6', la pompe volumétrique 1 qui alimente le groupe hydromécanique 2 injectant le carburant dans la chambre de combustion 3. Généralement aussi, le boîtier de relais d'accessoires fait le lien entre l'axe moteur 26 et un démarreur/générateur, non représenté sur cette figure, qui peut être utilisé pour entraîner la turbomachine lors des phases de démarrage ou générer un courant électrique lorsque la turbomachine est allumée.

La turbomachine peut aussi comporter des géométries variables 10, précédemment évoquées, que l'on peut activer dans certaines conditions d'utilisation. Ces géométries variables 10 sont, par exemple, des aubes à calage variable en entrée de compresseur basse pression.

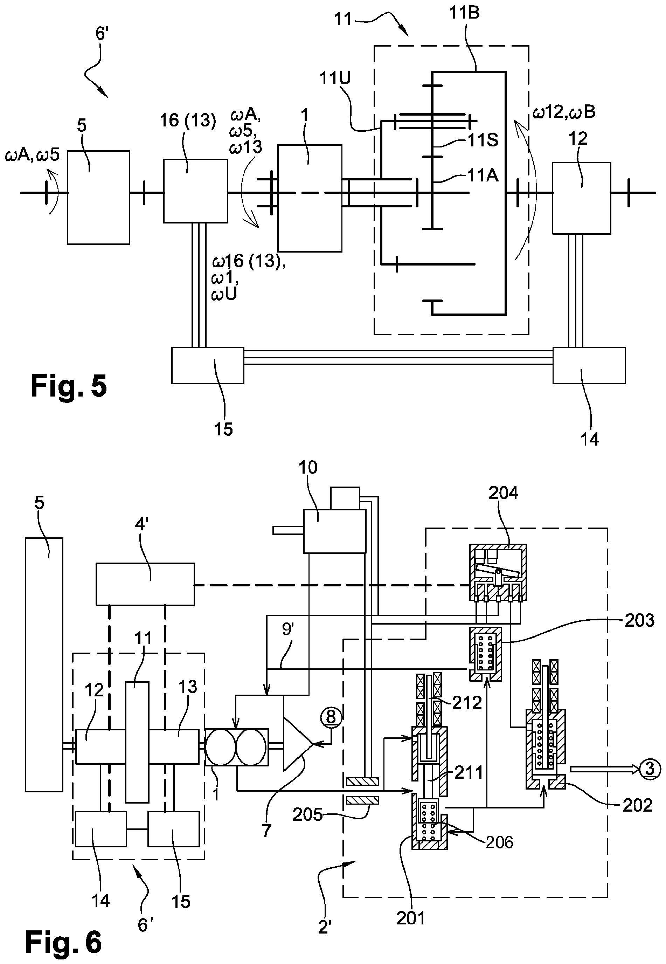

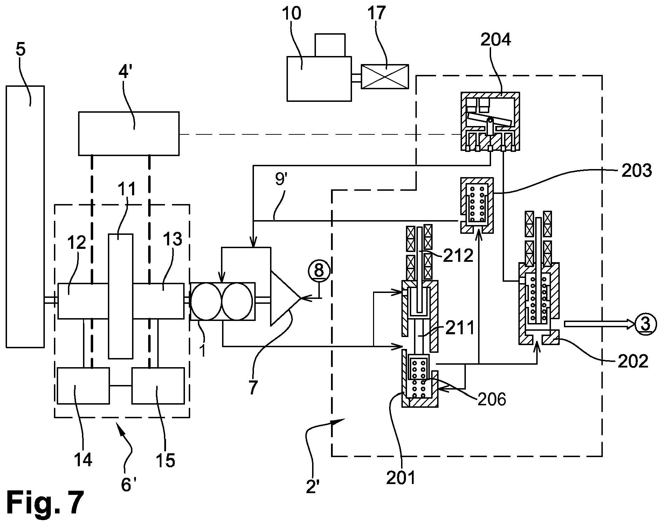

Ici, en référence à la figure 6 ou 7, le système d'alimentation en carburant comporte un dispositif d'entraînement 6' entre le boîtier de relais d'accessoires 5 et la pompe 1 différent de celui du système de la figure 1. La pompe 1 peut être de même nature que pour la solution classique. C'est une pompe volumétrique rotative, dont le débit est une fonction croissante de la vitesse de rotation ω1, apte à fournir le débit nécessaire à l'injection dans la chambre de combustion 3 et à mettre le circuit carburant en pression. De préférence, elle a une caractéristique linéaire Cyl reliant le débit de sortie à la vitesse de rotation ù1.

Tout d'abord, nous allons montrer qu'il existe au moins une solution pour réaliser un dispositif 6' capable de faire varier le rapport entre la vitesse de rotation de l'arbre du boîtier de relais d'accessoires 5 et la vitesse de rotation de l'arbre de la pompe 1, afin de pouvoir adapter le régime de la pompe 1 aux différents points de fonctionnement de la turbomachine.

Le dispositif d'entraînement 6' représenté comporte un réducteur à train épicycloïdal dont on utilise les propriétés pour adapter la vitesse de rotation de la pompe 1 au besoin de débit de carburant suivant les différents régimes de fonctionnement de la turbomachine.

En référence, à la figure 4, le réducteur à train épicycloïdal 11 comporte :

- un planétaire central 11A, agencé pour pouvoir tourner autour de l'axe du train à une vitesse ωA ;
- des satellites 11S engrenant avec le planétaire central 11A et portés par un porte-satellites 11U, le porte-satellites 11U étant agencé pour pouvoir tourner autour de l'axe du train à une vitesse ωU ;
- une couronne 11B externe avec laquelle les satellites 11S s'engrènent également, la couronne 11B étant agencée pour pouvoir tourner autour de l'axe du train à une vitesse ωB.

Une caractéristique du réducteur à train épicycloïdal 11 est donc que ses trois éléments, le planétaire central 11A, le porte-satellites 11U et la couronne 11B, sont capables de tourner. Ici, par exemple, la couronne 11B est libre de tourner à l'intérieur d'un carter fixe 11C protégeant le réducteur 11.

Le fonctionnement du train du réducteur 11 est régi par la formule de Willis qui montre qu'il s'agit d'un mécanisme à deux degrés de liberté et que la connaissance des vitesses de rotation de deux éléments parmi le planétaire central 11A, le porte-satellites 11U et la couronne 11B, permet le calcul de la vitesse de rotation du troisième.

Rotation du planétaire central 11A : ωA
Rotation du porte-satellites 11U : ωU
Rotation de la couronne 11B : ωB

$$\text{Formule de WILLIS : } (\omega A - \omega U) / (\omega B - \omega U) = k \text{ ou } \omega A - k* \omega B + (k-1)* \omega U = 0$$

Dans la formule de Willis, le facteur k, aussi appelé raison du train, est une constante déterminée par la géométrie des engrenages. Pour le réducteur 11 de la figure 4, k = - ZB/ZA, où ZA est le nombre de dents du planétaire central A et ZB le nombre de dents de la couronne B. Le facteur k est donc négatif avec un module inférieur à 1.

On comprend donc que, si l'arbre de sortie du boîtier de relais d'accessoires 5 est couplé à l'un des trois éléments et l'arbre de la pompe 1 est couplé à un deuxième élément, on peut faire varier la vitesse de rotation de la pompe 1 pour une vitesse donnée de l'arbre du boîtier 5 en faisant varier la vitesse de rotation du troisième élément.

Un premier moteur électrique 12 est couplé audit troisième élément pour piloter la vitesse de rotation de ce dernier.

Six combinaisons sont possibles pour positionner les trois équipements, boîtier de relais d'accessoires 5, pompe 1 et moteur électrique 12, par rapport aux trois éléments du réducteur à train épicycloïdal 11.

On couple également un second moteur 13 à l'un des éléments du réducteur 11 qui n'est pas relié au premier moteur 12. La position du second moteur 13 multiplie par deux le nombre de combinaisons possibles pour le dispositif 6'. On obtient ainsi douze combinaisons répertoriées dans le tableau ci-dessous.

Ce tableau indique également la fonction donnant la vitesse ω1 de la pompe 1 à partir de la vitesse ω5 de l'arbre du boîtier 5 et de la vitesse ω12 du premier moteur 12. La vitesse de rotation ω13 du second moteur 13 est déterminée par la vitesse de rotation de l'équipement avec lequel il est couplé en série sur le réducteur 11, soit l'arbre de la pompe 1, soit l'arbre de sortie du boîtier 5. Dans ce tableau, l'option 1 correspond aux cas où le second moteur 13 est couplé en série avec la pompe 1 sur le même élément du réducteur 11, et l'option 2 correspond aux cas où le second moteur 13 est couplé en série avec l'arbre de sortie du boîtier 5 de relais d'accessoires sur le même élément du réducteur 11.

Tableau 1.

| Liaison Boîtier/Pompe/ Premier moteur | | | Vitesse pompe | Liaison second moteur | |
|---|---|---|---|---|---|
| Boîtier 5 relié au porte-satellites 11U | | | | Option 1 | Option 2 |
| | Moteur 12 | Pompe 1 | | | |
| 1 A | couronne 11B | planétaire 11A | $\omega1 = (1-k)*\omega5 + k*\omega12$ | planétaire A | porte-satellites 11U |
| 1 B | planétaire 11A | couronne 11B | $\omega1 = -\omega5*(1-k)/k + \omega12/k$ | couronne B | porte-satellites 11U |
| Boîtier 5 relié à la couronne 11 B | | | | Option 1 | Option 2 |
| | Moteur 12 | Pompe 1 | | | |
| 2 A | porte-satellites 11U | planétaire 11A | $\omega1 = k *\omega5 +(1-k) *\omega12$ | planétaire A | couronne B |
| 2 B | planétaire 11A | porte-satellites 11U | $\omega1 = -\omega5*k/(1-k) + \omega12/(1-k)$ | porte-satellites 11U | couronne B |
| Boîtier 5 relié au planétaire 11A | | | | Option 1 | Option 2 |
| | Moteur 12 | Pompe 1 | | | |
| 3 A | couronne 11B | porte-satellites 11U | $\omega1 = \omega5/(1-k) - \omega12*k/(1-k)$ | porte-satellites 11U | planétaire A |
| 3 B | porte-satellites 11U | couronne 11 B | $\omega1 = \omega5/k - \omega12*(1-k)/k$ | couronne B | planétaire A |

Sur l'exemple illustré en figure 5, correspondant à la configuration « 3A-Option1 », le boîtier 5 est relié au planétaire central 11A, la pompe au porte-satellites 11U, le premier moteur électrique 12 est relié à la couronne 11B, de manière à pouvoir entraîner en rotation cette dernière, et le second moteur 13 est relié au porte-satellites 11U.

Le premier moteur 12 et le second moteur 13 comportent chacun un stator et un rotor. Lesdits moteurs 12, 13 sont pilotables en couple appliqué sur leur rotor et en vitesse de rotation $\omega12$, $\omega13$ de leur rotor. Il s'agit par exemple de moteurs asynchrones en courant alternatif. Le couple et la vitesse de chaque moteur 12, 13 sont alors pilotés par la puissance électrique et la fréquence du courant envoyé par un convertisseur 14, 15 dédié à chacun.

Par ailleurs, le second moteur 13 est électriquement lié au premier moteur 12 par l'intermédiaire desdits convertisseurs de tension réversibles 14, 15, afin de faire passer de la puissance de l'un à l'autre.

Par ailleurs, en référence aux figures 6 ou 7, le système d'alimentation en carburant diffère également de celui de la figure 1 en ce que le boîtier de commande 4' est relié au convertisseur 14, pour piloter la vitesse $\omega12$ et le couple du premier moteur 12 en vue d'adapter la vitesse $\omega1$ de la pompe 1, ainsi qu'au convertisseur 15, pour piloter le couple du second moteur 13 en vue de gérer le transfert de puissance entre les deux moteurs.

L'étude dynamique du réducteur 11 montre que le couple CA s'exerçant sur le planétaire 11A, le couple CB s'exerçant sur la couronne 11B et le couple CU s'exerçant sur le porte-satellites 11U sont reliés par deux relations :

$$CA + CB + CU = 0 \quad \text{(équilibre du train)}$$

$$\omega A *CA + \omega B *CB + \omega U *CU = 0 \quad \text{(équilibre dynamique)}$$

Compte tenu des relations liant les vitesses de rotation de ces éléments, cela permet de calculer les couples s'exerçant sur deux éléments du réducteur 11 connaissant le troisième.

Le second moteur 13, étant mis en série avec la pompe 1 ou le boîtier 5, voit sa vitesse de rotation déterminée comme étant égale à celle de cet équipement.

On comprend cependant qu'il apporte un degré de liberté supplémentaire au système suivant le couple qu'il exerce, qui vient s'ajouter à celui de la pompe 1 ou du boîtier sur l'élément correspondant du réducteur 11.

Ce degré de liberté supplémentaire peut être utilisé pour assurer un transfert de puissance avec le premier moteur : soit fournir de la puissance lorsque le premier moteur 12 intervient pour accélérer la pompe1 par rapport à l'entraînement du boîtier 5, soit absorber de la puissance lorsque le premier moteur 12 intervient pour freiner la pompe1.

Il est possible d'utiliser d'autres configurations que celle illustrée sur la figure 5. Le choix dépend des caractéristiques de fonctionnement de la turbomachine. Le choix des paramètres du dispositif que sont le facteur k du réducteur 11 du train épicycloïdal 11, le rapport de la vitesse de rotation $\omega 5$ en sortie du boîtier 5 par rapport à la vitesse de rotation de l'axe de la turbine, la caractéristique linéaire Cyl de la pompe 1, et le choix parmi les configurations 1A à 3B, doit être fait pour atteindre en particulier les objectifs suivants :

- permettre à la pompe 1 de tourner à une vitesse $\omega 1$ qui s'ajuste pour fournir un débit Cyl. $\omega 1$ correspondant au besoin F1, tel que représenté par exemple dans la figure 2, lorsque la vitesse de rotation de l'axe de la turbine varie entre ses valeurs minimale $\omega min$ et maximale $\omega max$ ;
- minimiser la puissance dépensée dans le moteur 12 pour ajuster la vitesse $\omega 1$ de la pompe 1 sur la plage de fonctionnement de la turbomachine.

Par ailleurs, les contraintes technologiques sur les équipements utilisés impliquent généralement que :

- la vitesse $\omega 1$ de la pompe 1 doit être inférieure à celle $\omega 5$ de l'arbre de sortie du boîtier de relais d'accessoires 5 ; et
- la vitesse $\omega 12$ du moteur électrique 12 doit être limitée à une valeur maximale.

Ce concept avec deux moteurs électriques auxiliaires pour le système d'entraînement entre le boîtier de relais d'accessoires 5 et la pompe 1 est très innovant car il offre les avantages suivants :

- prélèvement sur le boîtier de relais d'accessoires 5 uniquement de la puissance mécanique correspondant au besoin de puissance pour l'alimentation des géométries variables (besoin en pression) et pour l'alimentation en débit carburant (besoin en débit carburant),
- réduction de la cylindrée de la pompe 1,
- réduction drastique du dimensionnement de la boucle de recirculation 9' du débit pompe,
- simplification de l'architecture du groupe hydromécanique 2 de régulation du carburant,
- aucun besoin en puissance externe lors du pilotage de la vitesse de la pompe par un moteur 12 grâce au transfert de puissance entre ce moteur et le second moteur 13.

Dans le système décrit dans ce qui précède, le premier moteur 12 et le second moteur 13 sont des équipements spécialement dédiés, ajoutés pour faire fonctionner le dispositif d'entraînement 6'. On peut, dans une variante, utiliser le démarreur de la turbomachine pour faire office de premier ou de second moteur du dispositif.

Le concept de système d'alimentation en carburant développé dans la suite permet une utilisation optimale d'un tel dispositif d'entraînement 6'.

En référence à la figure 6, un système d'alimentation en carburant selon l'invention, comprend :

- un dispositif d'entraînement 6' entre le boîtier de relais d'accessoire 5 et la pompe 1 tel que décrit précédemment, permettant d'adapter le régime de la pompe 1 ;
- une pompe 1 dimensionnée pour être adaptée au débit fourni avec le système selon l'invention ;
- un moyen d'alimentation 7 du circuit à partir des réservoirs de carburant 8 ;
- un bloc hydromécanique 2' selon l'invention ;
- une électronique de commande 4'.

Ici, le système d'alimentation en carburant est également connecté à des actionneurs de géométries variables 10.

Le groupe hydromécanique 2' selon l'invention comporte les éléments suivants :

- un capteur de débit 201 de carburant entre la pompe 1 et l'injection vers la chambre de combustion 3 ;
- un clapet de pressurisation 202 au niveau de l'injection vers la chambre de combustion 3;
- un clapet de retour 203 placé en dérivation entre le capteur de débit 201 et le clapet de pressurisation 202, et branché vers une boucle de recirculation 9' ;
- une servovalve 204 commandant essentiellement le clapet de pressurisation 202 et le clapet de retour 203.

Lorsque le circuit de carburant est utilisé pour actionner des géométries variables 10, le circuit de carburant comprend avantageusement une dérivation 205 pour alimenter une boucle de commande des actionneurs des géométries variables 10. Cette dérivation 205 est ici placée entre la pompe 1 et le capteur de débit 201 du groupe hydromécanique 2'.

Le capteur de débit 201 est réalisé par un doseur modifié.

Un doseur généralement utilisé dans un circuit classique comprend un tiroir coulissant 211 dont la position commande le débit passant par une section de dosage. De plus, un capteur 212 de la position du tiroir 211 permet d'asservir le doseur, classiquement par une servovalve.

Ici, la position du tiroir 211 n'est pas pilotée par une servovalve, mais directement par la différence de pression aux bornes du capteur de débit 201 qui compense l'effort appliqué par un moyen de rappel 206, par exemple un ressort, sur le tiroir 211, à l'instar du pilotage de la soupape régulatrice de la solution classique. Connaissant les caractéristiques de la section de dosage et du ressort, la position lue par le capteur 212 de position du tiroir 211 fournit l'information du débit réellement injecté par le circuit de carburant vers la chambre de combustion.

L'information de débit peut ainsi être, par exemple, transmise au boîtier de l'électronique de commande 4' pour qu'il agisse sur le dispositif d'entraînement 6' et que ce dernier adapte la vitesse de la pompe 1 pour assurer le débit de carburant adapté au besoin.

Le bloc hydromécanique 2' perd donc sa fonction de régulation du débit mais assure une fonction de capteur de débit. Il conserve les fonctions de coupure du carburant et de pressurisation du système par le clapet de pressurisation 202.

Le clapet de pressurisation 202 permet d'assurer la pression minimale pour le bon fonctionnement des géométries variables, ainsi que la coupure du débit injecté.

Le clapet de retour 203, permet d'assurer l'échappement du débit délivré par la pompe 1 afin de ne pas monter en pression dans le circuit, lors de l'activation de cette coupure par la servovalve 204 .

Cependant cette recirculation n'existe que lors de la phase d'arrêt, ou lors de la préparation à l'allumage, le temps de la diminution de la vitesse de rotation de la pompe 1. La boucle de recirculation 9' est donc nettement moins importante que pour un circuit classique.

A l'allumage, la pompe 1 est entraînée à une vitesse de rotation minimale. Une partie du débit traverse le capteur 201 et est recirculée par le clapet de retour 203.

La vitesse de la pompe 1 est ensuite adaptée pour atteindre la bonne consigne de débit d'allumage. La servovalve 204 est alors activée, ce qui entraîne l'ouverture du clapet de pressurisation 202, la fermeture du clapet de retour 203 et donc permet l'injection du débit d'allumage vers la chambre de combustion 3.

Enfin, le clapet de retour 203 assure la protection en cas de survitesse liée à une défaillance du contrôle de la vitesse de la pompe 1.

En cas d'appel de débit lié à l'actionnement des géométries variables 10, pour une vitesse de rotation donnée de la pompe 1, le débit traversant le capteur 201 tend à diminuer à cause de la dérivation 205 vers les géométries variables 10, qui est placée en amont. L'information d'une baisse de débit oblige le dispositif d'entraînement 6' à accélérer la vitesse de la pompe 1 afin de maintenir le bon débit injecté demandé.

Une boucle de contrôle basée sur l'information de débit du capteur 201, installée dans le boîtier de commande 4', permet donc d'adapter la vitesse de pompe pour tout point de fonctionnement de la turbomachine, que les géométries variables 10 soient actives ou non.

Ce concept de bloc hydromécanique 2' permet donc de tirer parti d'un dispositif d'entraînement 6' capable d'adapter la vitesse de rotation de la pompe au besoin.

Il n'y a donc plus besoin de dimensionner une boucle de recirculation 9' pour dissiper un surplus de débit important et cela permet de gagner en puissance prélevée sur le boîtier de relais d'accessoires 5 pour l'alimentation en carburant. Cela permet également de supprimer la soupape régulatrice qui existe dans un circuit classique.

De plus, la fonction de doseur ayant été supprimée, il n'est pas non plus besoin d'un surplus de débit pour la faire fonctionner.

Le bloc hydromécanique 2' permet donc de tirer parti au mieux du gain de puissance potentiel offert par le dispositif d'entraînement 6'.

Il est à noter que ce concept fonctionne également sans alimentation de géométries variables, par exemple si celles-ci sont pilotées par des moyens électriques 17, comme cela est représenté sur la figure 7. Dans une configuration sans géométrie variable, la solution ne sera que plus simple à mettre en œuvre, et plus efficace en termes de gain de puissance.

Dans une étude préliminaire qui a été réalisée en se basant sur un type particulier d'application, où chaque point de fonctionnement est décrit en termes de vitesse du boîtier 5, de débit injecté, de débit de refroidissement des géométries variables 10, de fuites internes, de débit nécessaire au déplacement des géométries variables et de pression d'injection, les inventeurs ont ainsi constaté un gain significatif de puissance nécessaire pour réaliser l'injection, que ce soit avec ou sans alimentation hydraulique des géométries variables.

Ce concept a aussi d'autres impacts positifs.

En ce qui concerne la pompe volumétrique 1, sa cylindrée peut être diminuée d'au moins un tiers par rapport à une solution classique. Il y a aussi un gain d'encombrement lié à la diminution du diamètre des pignons et un gain de masse.

En ce qui concerne le bloc hydromécanique 2', on note une simplification et des gains de masse liés à la disparition d'une servovalve, au remplacement d'une soupape régulatrice par un clapet de retour et à la possibilité de suppression d'un electro-robinet.

Le concept peut aussi permettre une diminution de la taille des échangeurs thermiques.

De plus, avec la solution proposée, il est possible de réaliser une action de surveillance d'équipement.

Il suffit pour cela d'ajouter un capteur de vitesse, non représenté, à la pompe volumétrique 1.

En effet, le capteur 201 indique le débit de carburant. La pompe volumétrique 1 ayant une caractéristique liant la vitesse de rotation et le débit injecté, Il est possible, sur un point stabilisé, ou lors d'un point fixe moteur en ventilation sèche, de contrôler l'usure de la pompe 1 : une dérive trop importante de la lecture du débit à une vitesse de pompe donnée, indiquerait une augmentation de fuite dans le système, quelle soit au niveau de la pompe ou des fuites internes au système carburant.

**Revendications**

1. Système d'alimentation en carburant d'une turbomachine, comportant un circuit de carburant comportant un moyen de pressurisation (202) en sortie (3) dudit circuit, une pompe (1) agencée pour envoyer dans ledit circuit un débit de carburant qui est une fonction croissante de la vitesse de rotation ($\omega$1) d'un arbre de ladite pompe, **caractérisé en ce que** le circuit comporte un capteur de débit (201) placé entre la sortie de la pompe (1) et le moyen de pressurisation (202), le capteur de débit (201) comprenant un tiroir coulissant (211), un moyen de rappel (206) et un capteur (212) de position dudit tiroir, la position dudit tiroir (211) étant pilotée par une différence de pression aux bornes du capteur de débit (201) conformée pour compenser l'effort appliqué par le moyen de rappel (206) sur ledit tiroir (211), le circuit étant agencé pour que la position dudit tiroir indique le débit passant par le capteur de débit (201), **en ce que** le système comporte un dispositif (6') agencé pour entraîner la pompe (1) avec une vitesse de rotation commandable, et **en ce que** le système comporte des moyens (4') agencés pour commander le dispositif (6') à partir d'une mesure fournie par le capteur de débit (201), de manière à adapter la vitesse de rotation ($\omega$1) de l'arbre de la pompe (1) pour respecter une consigne de débit en sortie (3) du circuit de carburant.

2. Système d'alimentation selon la revendication précédente, dans lequel le circuit de carburant comporte une boucle de commande destinée à actionner des géométries variables (10) de la turbomachine, ladite boucle de commande démarrant par un piquage sur une dérivation (205) placée entre la sortie de la pompe (1) et le capteur de débit (201).

3. Système d'alimentation en carburant d'une turbomachine selon l'une des revendications précédentes, dans lequel le dispositif d'entraînement (6') est destiné à entraîner la pompe (1) à partir d'un axe moteur (26) de ladite turbomachine et est agencé pour faire varier le rapport entre la vitesse de rotation de l'arbre de la pompe (1) et celle de l'axe moteur (26).

4. Système d'alimentation selon l'une des revendications précédentes, dans lequel le dispositif d'entraînement comporte un réducteur (11) à train épicycloïdal comprenant trois éléments, un planétaire (11A) central, une couronne (11B) externe et un porte-satellites (11U) dont les satellites (11S) s'engrènent avec le planétaire et la couronne, un premier des trois éléments étant destiné à être relié à l'axe moteur (26) et un second des trois éléments étant destiné à être couplé à un arbre de la pompe (1), **caractérisé en ce que** lesdits trois éléments sont mobiles en rotation autour d'un axe du réducteur, **en ce que** ledit dispositif d'entraînement comporte en outre au moins des premiers moyens électriques (12) agencés pour entraîner en rotation le troisième desdits éléments du réducteur (11), de manière à modifier un rapport de vitesse de rotation entre le premier et le second desdits éléments.

5. Système d'alimentation selon la revendication précédente, dans lequel le dispositif d'entraînement (6') comporte des seconds moyens électriques (13) couplés au premier ou au second desdits éléments du réducteur (11), les premier et second moyens électriques étant agencés pour transférer de la puissance électrique de manière réversible de l'un à l'autre.

6. Turbomachine comportant un système selon l'une des revendications précédentes.

7. Procédé de régulation d'une pompe (1) à carburant pour une turbomachine selon la revendication 6 dans un aéronef, **caractérisé en ce qu'**il met en œuvre des lois de pilotage de la vitesse de rotation de l'arbre de la pompe (1), qui augmentent ou, respectivement, diminuent cette vitesse lorsque le débit indiqué par le capteur (205) diminue ou augmente, de manière à ce que le débit et la pression en sortie du circuit soit adapté aux conditions de vol de l'aéronef.

8.  Procédé selon la revendication précédente, en dépendance de la revendication 2, dans lequel lesdites lois de pilotage sont agencées pour adapter également le débit fourni par la pompe et la pression dans le circuit aux conditions d'utilisation des géométries variables (10).


**Patentansprüche**

1.  System zur Versorgung einer Turbomaschine mit Kraftstoff, umfassend einen Kraftstoffkreislauf, der ein Mittel zur Druckbeaufschlagung (202) am Ausgang (3) des Kreislaufs umfasst, eine Pumpe (1), die angeordnet ist, um in den Kreislauf einen Kraftstoffdurchfluss zu schicken, der eine steigende Funktion der Drehzahl ($\omega$1) einer Welle der Pumpe ist, **dadurch gekennzeichnet, dass** der Kreislauf einen Durchflusssensor (201) umfasst, der zwischen dem Ausgang der Pumpe (1) und dem Mittel zur Druckbeaufschlagung (202) angeordnet ist, wobei der Durchflusssensor (201) einen Gleitschieber (211), ein Rückstellmittel (206) und einen Sensor (212) für die Position des Schiebers umfasst, wobei die Position des Schiebers (211) durch eine Druckdifferenz an den Anschlusspunkten des Durchflusssensors (201) gesteuert wird, die angepasst ist, um die Kraft zu kompensieren, die durch das Rückstellmittel (206) auf den Schieber (211) ausgeübt wird, wobei der Kreislauf angeordnet ist, damit die Position des Schiebers den Durchfluss anzeigt, der durch den Durchflusssensor (201) verläuft, dadurch, dass das System eine Vorrichtung (6') umfasst, die angeordnet ist, um die Pumpe (1) mit einer regelbaren Drehzahl anzutreiben, und dadurch, dass das System Mittel (4') umfasst, die angeordnet sind, um die Vorrichtung (6') ausgehend von einer Messung zu regeln, die von dem Durchflusssensor (201) bereitgestellt wird, sodass die Drehzahl ($\omega$1) der Welle der Pumpe (1) angepasst wird, um einen Durchflusssollwert am Ausgang (3) des Kraftstoffkreislaufs einzuhalten.

2.  System zur Versorgung nach dem vorstehenden Anspruch, wobei der Kraftstoffkreislauf eine Regelschleife umfasst, die dazu bestimmt ist, variable Geometrien (10) der Turbomaschine zu betätigen, wobei die Regelschleife mit einem Anschluss auf einer Abzweigung (205) beginnt, die zwischen dem Ausgang der Pumpe (1) und dem Durchflusssensor (201) platziert ist.

3.  System zur Versorgung einer Turbomaschine mit Kraftstoff nach einem der vorstehenden Ansprüche, wobei die Antriebsvorrichtung (6') dazu bestimmt ist, die Pumpe (1) ausgehend von einer Motorachse (26) der Turbomaschine anzutreiben, und angeordnet ist, um das Verhältnis zwischen der Drehzahl der Welle der Pumpe (1) und jener der Motorachse (26) variieren zu lassen.

4.  System zur Versorgung nach einem der vorstehenden Ansprüche, wobei die Antriebsvorrichtung einen Reduktor (11) mit einem Umlaufgetriebe umfasst, das drei Elemente, ein Zentralrad (11A), einen Außenkranz (11B) und einen Planetenträger (11U) umfasst, dessen Planetenräder (11S) mit dem Zentralrad und dem Kranz in Eingriff stehen, wobei ein erstes der drei Elemente dazu bestimmt ist, mit der Motorachse (26) verbunden zu werden, und ein zweites der drei Elemente dazu bestimmt ist, an eine Welle der Pumpe (1) gekoppelt zu werden, **dadurch gekennzeichnet, dass** die drei Elemente um eine Achse des Reduktors drehbar sind, dadurch, dass die Antriebsvorrichtung weiter mindestens erste elektrische Mittel (12) umfasst, die angeordnet sind, um das dritte der Elemente des Reduktors (11) in Drehung zu versetzen, sodass ein Drehzahlverhältnis zwischen dem ersten und dem zweiten der Elemente geändert wird.

5.  System zur Versorgung nach dem vorstehenden Anspruch, wobei die Antriebsvorrichtung (6') zweite elektrische Mittel (13) umfasst, die an das erste oder an das zweite der Elemente des Reduktors (11) gekoppelt sind, wobei die ersten und zweiten elektrischen Mittel angeordnet sind, um die elektrische Leistung reversibel von einem auf das andere zu übertragen.

6.  Turbomaschine, umfassend ein System nach einem der vorstehenden Ansprüche.

7.  Verfahren zur Regulierung einer Kraftstoffpumpe (1) für eine Turbomaschine nach Anspruch 6 in einem Luftfahrzeug, **dadurch gekennzeichnet, dass** es Gesetze zur Steuerung der Drehzahl der Welle der Pumpe (1) anwendet, die diese Drehzahl erhöhen beziehungsweise verringern, wenn sich der Durchfluss, der von dem Sensor (205) angezeigt wird, verringert oder erhöht, sodass der Durchfluss und der Druck am Ausgang des Kreislaufs an die Flugbedingungen des Luftfahrzeugs angepasst werden.

8. Verfahren nach dem vorstehenden Anspruch, in Abhängigkeit von Anspruch 2, wobei die Steuerungsgesetze angeordnet sind, um auch den Durchfluss, der von der Pumpe bereitgestellt wird, und den Druck im Kreislauf an die Nutzungsbedingungen der variablen Geometrien (10) anzupassen.

**Claims**

1. Fuel supply system of a turbomachine, comprising a fuel circuit comprising pressurization means (202) at the outlet (3) of said circuit, a pump (1) arranged to send into said circuit a fuel flow rate which is an increasing function of the rotational speed ($\omega$1) of a shaft of said pump, **characterized in that** the circuit includes a flow rate sensor (201) placed between the outlet of the pump (1) and the pressurization means (202), the flow rate sensor (201) comprising a sliding drawer (211), a return mean (206) and a sensor (212) for detecting the position of said drawer, the position of said drawer (211) being controlled by a pressure difference across the flow rate sensor (201) shaped to compensate for the force applied by the return mean (206) to said drawer (211), the circuit being arranged so that the position of said drawer indicates the flow rate passing through the flow rate sensor (201), **in that** the system comprises a device (6') arranged to drive the pump (1) with a controllable rotational speed, and **in that** the system comprises means (4') arranged so as to control the device (6') on the basis of a measurement provided by the flow rate sensor (201), so as to adapt the rotational speed ($\omega$1) of the shaft of the pump (1) to respect a flow rate setpoint value at the outlet (3) of the fuel circuit.

2. Fuel supply system according to the preceding claim, wherein the fuel circuit includes a control loop intended to actuate variable geometries (10) of the turbomachine, said control loop starting with a branch connection on a derivation (205) located between the outlet of the pump (1) and the flow rate sensor (201).

3. Fuel supply system of a turbomachine according to one of the preceding claims, wherein the drive device (6') is intended to drive the pump (1) from a drive shaft (26) of said turbomachine and is arranged to vary the ratio between the rotational speed of the shaft of the pump (1) and that of the drive shaft (26).

4. Fuel supply system according to one of the preceding claims, wherein the drive device comprises an epicyclic gear reducer (11) comprising three elements, a central sun gear (11A), an outer ring gear (11B) and a planet carrier (11U), whose planets (11S) mesh with the sun gear and the ring gear, a first of the three elements being intended to be connected to the drive shaft (26) and a second of the three elements being intended to be coupled to a shaft of the pump (1), **characterized in that** said three elements are movable in rotation about an axis of the reducer, **in that** said drive device further comprises at least first electrical means (12) arranged so as to rotatably drive the third of said elements of the reducer (11), in such a way as to modify a rotational speed ratio between the first and second of said elements.

5. Fuel supply system according to the preceding claim, wherein the drive device (6') comprises second electrical means (13) coupled to the first or second of said elements of the reducer (11), the first and second electrical means being arranged to transfer electrical power reversibly from one to the other.

6. Turbomachine comprising a system according to one of the preceding claims.

7. Method for regulating a fuel pump (1) for a turbomachine according to claim 6 in an aircraft, **characterized in that** it implements control laws of the rotational speed of the shaft of the pump (1), which increase or respectively decrease this speed when the flow rate indicated by the sensor (201) decreases or increases, so that the flow rate and pressure at the outlet of the circuit are adapted to the flight conditions of the aircraft.

8. Method according to the preceding claim, when depending on claim 2, in which said control laws are arranged to also adapt the flow rate provided by the pump and the pressure in the circuit to the conditions of use of the variable geometries (10).

**Fig. 1**

**Fig. 2**

**Fig. 3**

**Fig. 4a**

**Fig. 4b**

**Fig. 4**

**Fig. 4c**

Fig. 5

Fig. 6

**Fig. 7**

## RÉFÉRENCES CITÉES DANS LA DESCRIPTION

**Documents brevets cités dans la description**

- FR 2934321 A1
- EP 3051103 A1
- FR 3035155 A1